# EUROPEAN PATENT APPLICATION

(11) **EP 3 493 347 A1**
(43) Date of publication of application: **05.06.2019**
(21) Application number: 17382819.5
(22) Date of filing: 01.12.2017
(51) Int. Cl.: H02J 3/00, H02J 13/00

(54) **A METHOD AND A SYSTEM FOR DECENTRALIZED ENERGY DISTRIBUTION**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES); Pilaszanovich, Jakab, 28013 Madrid (ES); Foster, John, 28013 Madrid (ES); Conti, Maurice, 28013 Madrid (ES)
(74) Representative: Carlos Hernando, Borja

(57) **Abstract**

The method comprises distributing energy between several nodes of an energy network, each comprising and one or more devices including energy loads, wherein the energy distribution being performed via a layered stack model in which energy distribution interactions between the nodes occur at a same stack layer across the nodes, each node comprising a stack model having at least three layers, and wherein each layer comprises a control plane for exchanging control information between layers and nodes and an energy plane for exchanging actual energy among layers and nodes.

## Description

### Field of the invention

The present invention generally relates to distributed energy networks. In particular, present invention relates to a method, and to a system, for decentralized energy distribution in such kind of energy networks enabling networked nodes to exchange energy, preferably electrical energy, to match distributed energy generation, storage and/or loads.

### Background of the invention

There are two types of electrical energy networks deployed in the world today: centralized generation that reacts to user loads connected in a hierarchical, unidirectional distribution; and stand-alone small-scale, single-dwelling systems of generation (typically solar), storage, and minimal appliances. The centralized system suffers from significant up-front costs and lack of control to prevent cascading failures. The stand-alone systems are not cost-effective on a community scale. Consequently, there have been proposals for something in between that exchanges electrical energy among distributed generation and loads in a way modeled after the Internet and how it exchanges information.

An Internet-style electrical energy distribution enables peer-to-peer energy trading and the decentralized architecture enables the network to grow organically from the bottom up, providing the scale unattainable with stand-alone systems and avoiding the upfront investments and planning of a traditional centralized electrical energy distribution system. But with the opportunity comes complexity and structure is needed in order to manage that complexity. The Internet uses a layered model, the most common of which is the well-known TCP/IP (Transmission Control Protocol / Internet Protocol) stack. The architecture presented in this patent application is an analogous layered approach for general energy networks.

A layered approach to electrical energy distribution was mentioned in the following scientific document B. Nordman and K. Christensen, "DC Local Power Distribution with microgrids and nanogrids," 2015 IEEE First International Conference on DC Microgrids (ICDCM), Atlanta, GA, 2015, pp. 199-204.

In that document, Nordman and Christensen focus only on electricity distribution within a building, not a generalized approach to connect nodes at different scales as described in present invention. The system comprises a single controller per "nanogrid" which communicates directly with loads and local generation, and also has a connection to the larger power grid. They recommend five layers, from the top down: 5. Functional coordination; 4. Device discovery and events 3. Internal integration; 2. Exchange within/between grids; 1. Transport of electrons. The focus of the functions at these layers is to predict and prioritize electricity supply and demand at the local node and determine when to get energy from the conventional grid. Layers 1 and 2 address power distribution. How the local controller coordinates with other controllers or the power grid is explicitly out of scope of the design. Layers 3 and 4 implement device functionality. No information is exchanged between devices at layer 3. Information exchanged between layers is limited to demand, supply, and an associated generalized "price," for the current time and a non-binding prediction for the future. Note that this design deals only with the decisions and control information. The actual electricity is not assumed to flow through the stack in the same layered manner; the electricity stays at the lowest layer, layer 1.

A different technology is proposed in EP-B1-2430723. This design addresses trading between nodes and discusses routing and forwarding of what they call energy packets. An end-to-end route through the networks is determined and a specific amount of electrical energy is contracted to flow over that route. The patent refers to a separate transport plane and control plane, but it is restricted to the routing protocol and is presented as corresponding packets in the network, one that contains route information and one that contains the energy to be transferred. This patent requires energy to be "packetized." Addition or removal of nodes is addressed only through the routing protocol's ability to adapt to changing network topologies. Discovery of sources and destinations is not explicitly addressed. There is an example of scheduling use of a laundry machine, but it is limited to specifying a later time when energy is expected to be lower cost. The energy transaction is scheduled for the later time and the laundry is powered when that energy arrives.

The main problem with the network-focused solutions mentioned above is that they are very specific solutions to very specific problems and they are not sufficiently flexible to address the broader range of energy distribution problems. The network needs to be flexible to evolve as new devices come with unforeseen characteristics or needs, as well as the network grows in size. Each of the previous technologies does not allow evolution.

Drawing from the experience of the Internet, it is known it is important for the layered organization be the same for the data as for the control. The prior art views the energy control as data and does not recognize that here energy takes the place of the data in the information network. Present invention needs both an energy plane and a control plane that follow the same structure. As a result, the devices in an energy network (source, loads, storage) are the applications and go at the top.

As an example neither of the above-referenced prior technologies is capable of scheduling an energy transfer (either early retrieval for pre-caching energy or reserving energy for a future time) across a network of multiple sources and loads in a way that minimizes losses and congestion in the network. More specifically, in order to perform that scheduling, the system needs the following capabilities: (1) nodes with need or storage capacity need the ability to discover nodes with generation capabilities or stored energy (and vice versa); (2) nodes need to be able to specify a value or price for the energy that can change over the course of the day (or days) dependent on expected generation and storage levels and expected demands over the network; (3) nodes need to be able to prioritize loads (and storage) when not all demands can be met at a specific time; (4) nodes need to be able to calculate the costs (in terms of losses as well as potential monetary payments to trading partners) of the transfer of energy through the network; (5) nodes need to be able to monitor the status of the network and adapt to faults, congestion, underutilization, or other performance degradations; and (6) nodes need to automatically adapt as new nodes are added to the network, or as connections change or are removed. The network must do all of these, with appropriate interfaces and exchanges, to allow the system to grow and adapt.

Nordman and Christensen address an aspect of (2) but only loosely treat price as a non-binding estimate for future needs or availability. EP-B1-2430723 deals with (4) assuming a particular strategy for routing and forwarding electrical energy and assumes all other functions are solved separately (e.g., discovery, prediction, price-setting, reliability monitoring, etc.).

More solutions are therefore needed to optimize delivery of energy to distributed storage systems and loads.

### Description of the Invention

Embodiments of the present invention provide according to an aspect a method for decentralized energy distribution, in which a plurality of connected nodes of an energy network are adapted for distributing energy between them, and wherein each node comprises one or more devices including energy loads.

According to the proposed method, the distribution of energy, preferably electrical energy, is performed via a layered stack model in which energy distribution interactions between the nodes occur at a same stack layer across the nodes. Each node comprises a stack model having at least three layers and each layer comprises a control plane for exchanging control information between layers and nodes and an energy plane for exchanging actual (i.e. at a current period of time) energy among layers and nodes.

In a preferred embodiment, the layered stack model comprises four layers including a first layer, located at the top of the stack model, at least including said energy loads; a second layer, located under the first layer, matching sources of energy to destinations according to the cost and value two nodes have for certain amounts of energy at a particular time of day; a third layer, located under the second layer, defining a path over which energy has to be distributed; and a fourth layer, located at the bottom, under the third layer, defining a transmission medium through which the energy will be distributed between adjacent nodes in the energy network.

In an embodiment, each node further comprises energy generation elements and energy storage elements. Preferably, the energy generation elements and loads, which are both preferably included in the first layer, are preferably characterized by voltage level(s) at which they operate, power level(s) they provide or consume energy, frequency of oscillation of the energy signal and a schedule for when they will be active and predicted power level(s) for said active period. The energy storage elements may be characterized by battery discharge limit(s) and current and desired storage level(s). The energy storage elements are preferably included in the first layer of the stack model, together with the energy generation elements and loads. Alternatively, the energy storage elements could be separated into a layer different from the energy generation elements and loads. In this alternative case the layered stack model could comprise more than four layers.

In an embodiment, the method further associates a fixed or variable value to energy to the energy generation elements, energy storage elements and loads.

Preferably, the control plane of the first layer comprises providing an interface to the second layer for defining: whether the elements and loads are sources of energy or receptors, waveform features, nominal voltage level(s), power level(s) or range, value of the energy as function of power level or time and predicted active time and relevant features including power level, and wherein the energy plane of the first layer provides or receives the energy at appropriate times and voltage levels to or from the second layer.

Moreover, the control plane of the second layer comprises providing an interface to the third layer for defining: source and/or destination information, energy quantity rate, schedule details and voltage level(s), and wherein the energy plane of the second layer provides information about a contracted energy from the source(s) of energy at the appropriate voltage level at a specified time period and receives energy from the third layer at a desired voltage and agreed upon time.

Likewise, the control plane of the third layer comprises providing an interface to the second layer for defining costs and/or schedule impacts of distributing the energy over the network, and wherein the control plane of the third layer provides and interface to the fourth layer indicating a planned amount of energy to distribute to/from a specific node over a specified time period.

Finally, the control plane of the fourth layer comprises providing an interface to the third layer for defining physical features including losses and/or congestion information of each link.

In an embodiment, the second layer further informs the first layer whether or not an energy demand requested by the first layer will be met and/or to what degree it will be met.

In another embodiment, the third layer further includes capacity limits of links along the defined path and losses occurring on said links and at intermediate nodes.

Even in the preferred embodiment the layered stack model has four layers; present invention can be implemented using a layered stack model with more layers or fewer, as appropriate. For example, the four layers could be collapsed into three by moving some features of the third layer to the second layer and some features to the fourth layer. Therefore, in this case the layered stack model would only have three layers.

Embodiments of the present invention also provide according to another aspect a system configured to perform the method embodiment steps and operations summarized above and disclosed in detail below.

In particular, the proposed system has a plurality of connected nodes of an energy network adapted and configured to distribute energy between them, for instance electrical energy, among others, and each comprising one or more device including energy loads.

In the proposed system each node comprises a layered stack model through which said distribution of energy is performed, so that energy distribution interactions between the nodes occur at a same stack layer across the nodes.

In a preferred embodiment, each stack model has four layers in which each layer comprises a control plane configured to exchange control information between layers and nodes and an energy plane configured to exchange actual energy among layers and nodes.

In the proposed system, the loads include one of lighting systems and appliances including televisions, radios, kitchen appliances and refrigerators and/or heating equipment, among others.

In an embodiment, each node further comprises energy generation elements such as solar panels, wind turbines, diesel generation systems, geothermal systems, a human-powered crank generator, etc. and/or energy storage elements such as batteries or capacitors.

Present invention enables more flexible and adaptable energy distribution, accommodating a broad range of different technologies and topologies in the same framework, whereas each instance of the prior art is narrowly focused and does not extend to cover other cases.

Present invention also matches the control of energy to the actual energy flow and associated decisions such as voltage conversions, pre-caching, reserving energy in advance, and selecting different modes for transporting energy (e.g. wires, wireless, non-electrical).

A consequence of this approach is that instantiations based on this technology can be more efficient in meeting user demands given variable power generation (such as from renewables like solar and wind) and more cost-effective in their ability to build infrastructure and evolve it as usage grows. The prior art, due to its narrow scope cannot adapt to meet the needs and deployments that are not envisioned today.

### Brief Description of the Drawings

The previous and other advantages and features will be more fully understood from the following detailed description of embodiments, with reference to the attached drawings, which must be considered in an illustrative and non-limiting manner, in which:
Fig. 1 is a schematic illustration of the layered stack model provided by present invention through which distribution of energy is performed, in accordance with a preferred embodiment.
Fig. 2 illustrates performance of the present invention according to an embodiment.

### Detailed Description of the Invention and of Preferred Embodiments

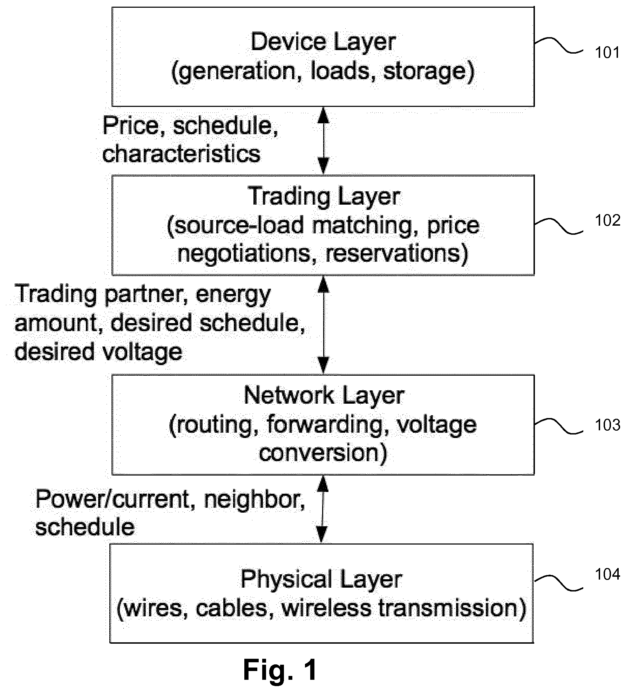

Fig. 1 illustrates a preferred embodiment of the present invention. As shown in Fig. 1, present invention breaks the functions needed for reliable energy delivery over a distributed energy network into a layered stack model, in this particular case comprising four layers. Note that this architecture has been developed with electrical energy distribution in mind, but is applicable to exchange and storage of other forms of energy as well.

The energy network includes a plurality of connected nodes (e.g. a home) adapted for distributing energy between them.

According to the preferred embodiment of Fig. 1, at the top of the stack model is the Device Layer, or first layer, 101 including energy generation elements (e.g., solar panels, wind turbines, diesel generators, etc.) and energy loads (e.g., lights, radios, televisions, etc.). Optionally, the Device Layer 101 may include energy storage elements (batteries, capacitors, etc.) which can act as both sources and loads, as appropriate. The next layer down is the Trading Layer, or second layer, 102 which matches sources of energy (e.g. electrical energy, or electricity) to destinations according to the cost and value two nodes have for certain amounts of energy at a particular time of day. This may include prediction of need and pre-ordering of energy, as well as pre-fetching of energy for storage and later use. Below the Trading Layer 102 is the Network Layer, or third layer 103, which defines the path(s) over which energy will flow and may include storage in components such as batteries or capacitors (among other possibilities) as well as translation to appropriate voltage levels. At the bottom of the stack is the Physical Layer, or fourth layer, 104 forming the transmission medium, which may comprise wires, fiber optics, or wireless energy transmission systems.

The architecture also comprises both a control plane, for exchange of control information between layers and nodes, and an energy plane for exchange of actual energy among layers and networked nodes. In such cases, the term voltage here will be used to represent generally the potential energy, whether electrical or other.

The energy generation elements and loads at the Device Layer 101 are characterized by the voltage level(s) at which they operate, the power (i.e. time rate of change of energy) level(s) they provide or consume energy, frequency of oscillation of the energy signal, and potentially a schedule for when the element/load will be active and predicted power levels for the active period, among other characteristics. In the case of energy storage devices, relevant characteristics may include battery discharge limits and current and desired storage levels. The elements/loads do not care where the energy comes from or goes to, nor do they care how the energy was generated or how it will be used. Elements/loads may care about quality of the energy signal (e.g. ripple or stability). Note that placing the elements/loads at the top of the layered stack model is counter to what seems natural since they are the immediate receivers of the energy over the physical wires. But if we think of the elements/loads in an energy network as the applications in an information network, the reasoning for this organization is clear.

The elements and loads at the Device Layer 101 may also associate a value to energy, either how much it costs to generate or store (which may include profit) or worth paying for to consume. This value may be fixed or alternatively vary over time and may be a function of power level, or other characteristics of the received/transmitted energy. Typically, higher layer functions operate on longer timescales than lower layers.

The control plane of the Device Layer 101 provides an interface to the Trading Layer 102 that consists of: whether the elements and loads are sources of energy or receptors, waveform features (e.g. direct current (DC), alternating current (AC) with specified frequency, or other appropriate characterization), nominal voltage level(s), power level(s) or range, value of the energy as function of power level or time and predicted active time and relevant features including power level.

The energy plane of the Device Layer 101 provides or receives the energy at appropriate times and voltage levels to or from the Trading Layer 102.

The Trading Layer 102 is responsible for matching sources of energy with loads according to characteristics such as power or energy, schedule, price, and priority, among others. Trading may occur with nodes that are not directly connected and in such cases accounts for costs and other consequences of intermediate nodes. Trading may also occur within a node, such as to deliver energy from a solar panel local to a node to a battery or load at the same node. Local and Network-wide policies may be defined and implemented at the Trading Layer 102. The Trading Layer 102 may include the mechanism for actually paying for energy trades. Note that in the example in which a node pre-fetches energy to be stored locally, two transactions occur: one to fetch the energy and store it; and one to move the energy from the storage to the load at the desired time.

The Trading Layer 102 preferably informs the Device Layer 101 whether or not requested demands will be met, or to what degree they will be met. Consequently, the interface to the Device Layer 101 is similar to that from the Device 101 to the Trading Layer 102 in terms of the categories of information shared.

The control plane of the Trading Layer provides an interface to the Network Layer 103 including source/destination information, energy quantity or rate, schedule details and voltage level(s). The energy plane provides the contracted energy from the source(s) of energy at the appropriate voltage level at the specified time, and similarly receives energy from the Network Layer 103 at the desired voltage and agreed upon time.

The Network Layer 103 determines the features of end-to-end routes of energy, including capacity limits of links along a path and losses that occur on links and at intermediate nodes.

Storage may occur at the Network Layer 103 as a form of queue or buffer. It is assumed that a few (potentially one) specific voltage levels are specified for transmission between nodes, whereas more voltage levels are desired by elements/loads at the Device Layer 101. The Network Layer 103 is responsible for converting voltage levels for different links as well as to meet the desired voltages of elements/loads.

The control plane from the Network Layer 103 to the Trading Layer 102 includes costs and/or schedule impacts of distributing, or routing, over the energy network. The control plane from the Network layer 103 to the Physical Layer 104 includes the planned amount of energy to transfer to/from a specific neighbor node over the specified time period.

The Physical Layer 104 provides the means to exchange the actual energy, or electrical energy, between adjacent nodes in the energy network. Most commonly, this is through a wire, but may also occur over fiber optic cable or even wirelessly. Typically, there are only two nodes involved in the transmission, one sender and one receiver. However, there are potential network configurations in which multiple transmitters and/or multiple receivers may be involved in a single transfer of energy and, as such, the system and interface designs can accommodate such circumstances.

A particular Physical Layer 104 is characterized by the voltage level at which it operates, the impedance experienced on the connection and/or the efficiency of energy transfer over the connection, any current limitations (e.g. ampacity), the node(s) on the transmitting end, the node(s) on the receiving end, whether the connection is bidirectional or unidirectional. Optionally, the Physical Layer 104 description may include a value related to the physical cost of the link.

The control plane from the Physical Layer 104 to the Network Layer 103 includes the physical features such as losses, congestion information for each link, and other costs.

Although Fig. 1 shows four distinct layers, the invention can be implemented using more layers or fewer, as appropriate. For example, the four layers of the layered stack model could be collapsed into three by moving a routing component of the Network Layer 103 into the Trading Layer 102 and moving voltage conversion to the Physical Layer 104. Or, alternatively, the energy storage elements could be separated into a layer different from the energy generation elements and energy loads.

Moreover, it should be noted that the presence of energy generation elements and energy storage elements in a node is not mandatory. The basic configuration scheme of a node applies if there are only energy loads at the node, i.e. the one or more devices a node has need only to include some type of energy loads, e.g. a home appliance, such as a television, a microwave, etc. or lights or any type of refrigeration system.

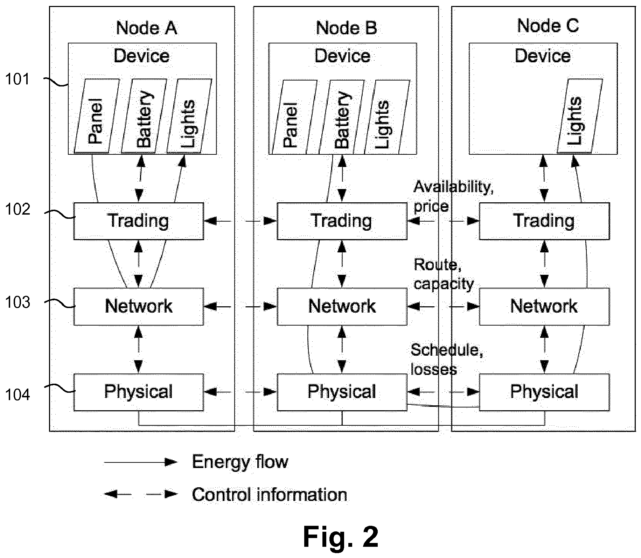

With reference now to Fig. 2, therein an example embodiment of the present invention performance is detailed. Consider three nodes of an energy network: two with solar panels, batteries, and lights (Node A and Node B); one with just lights (Node C). Assume Node A and Node B are connected to each other by a low-voltage wire and the Node C is connected to Node A or Node B.

When a node with panels and batteries turns on a light, for example Node A, a request goes from the light to the Trading Layer 102 for the desired amount of energy. The Trading Layer 102 will likely determine that it is cheapest to get that energy from itself, either from a panel if the panel is producing electrical energy, or from the battery if the panel is not producing electrical energy (or alternatively the node may be wired such that the panel always dumps its energy into the battery and all loads are supplied by the battery; regardless, the Trading Layer 102 accommodates such situations). The Trading Layer 102 sends the request to the Network Layer 103 to convert the desired amount of energy from the source voltage to the load voltage and power the light.

The Trading Layer 102 may also determine that either the panel and/or battery cannot meet the demands of the load or, perhaps, the Trading Layer 102 determines it can more optimally get the desired energy from a neighbor (or other node in the energy network, if the energy network were larger in this example). In that case, the Trading Layer 102 determines the cost to the node to purchase the energy, which includes paying for any energy that is lost in transmission and/or voltage conversions. The Trading Layer 102 at the other node with panels (Node B) provides its availability and price. The Network Layer 102 determines the losses and the Physical Layer 104 executes the energy exchange over the wires. In the case that the desired load cannot be met fully, some fraction of the desired power may be provided, or none, depending on the quality of service desire.

If Node C turns on a light, its Trading Layer 102 must go to one of the other nodes to supply the desired power, and will follow a similar procedure to that described above.

If a fourth node is added that only connects to Node C, the system enables that node to discover electrical energy available from Node A or B and flow it through Node C, accumulating the relevant costs.

A more complicated example involves a load that seeks to uses energy when the price is below a certain point and does not have a strict time for using it. In that case a policy may exist to monitor the energy network for prices and trade energy when the criterion is met. Or, a node may wish to schedule an energy transfer in advance essentially reserving the energy. The framework and interfaces support these examples as well.

The system design presented here also enables policies to be defined that govern how and when energy is to be transferred. For example a rule may be defined that equalizes the battery levels in all connected nodes, so that if a neighbor battery has less energy stored, energy will be transferred to it automatically.

The above system design can be configured to reflect the current electrical energy grid topology and control, as well as those of the stand-alone system. And therefore, it is also capable of being configured to reflect how the current grid may interface and interact with a peer-to-peer distributed energy system.

As alluded to above, while the impetus for present invention design is electrical energy, or electricity, distribution, the system components and interfaces apply to other energy distribution networks, as well. For example, a physical layer could be water flowing up or downhill. One node could act as an energy storage node holding a large amount of water at a high elevation. A transaction would consist of a request to release a certain amount of water to generate electrical energy (or other form of energy) downhill. Conversely, a surplus of energy at a downhill node could trigger a transaction to pump water uphill to the storage node. These transactions need to exchange information such as the state of the water storage node (how full is it; is any of it reserved for others' usage; etc.) as well as the scheduling for when to release or accept water and run the pump or accept energy from the water powered generator.

While the foregoing is directed to embodiments of the present invention, other and further embodiments of the invention may be devised without departing from the basic scope thereof. For example, other aspects may be implemented in hardware or software or in a combination of hardware and software.

The scope of the present invention is determined by the claims that follow.

## Claims

1. A method for decentralized energy distribution, wherein a plurality of connected nodes of an energy network are adapted for distributing energy between them, and wherein each node comprises one or more devices including energy loads, **characterized in that** said distribution of energy being performed via a layered stack model in which energy distribution interactions between the nodes occur at a same stack layer across the nodes, wherein each node comprising a stack model having at least three layers, and wherein each layer comprises a control plane for exchanging control information between layers and nodes and an energy plane for exchanging actual energy among layers and nodes.

2. The method of claim 1, wherein each node comprises a stack model having four layers, including:
a first layer, located at the top of the stack model, at least including said energy loads;
a second layer, located under the first layer, matching sources of energy to destinations according to the cost and value two nodes have for certain amounts of energy at a particular time of day;
a third layer, located under the second layer, defining a path over which energy has to be distributed; and
a fourth layer, located at the bottom, under the third layer, defining a transmission medium through which the energy will be distributed between adjacent nodes in the energy network,

3. The method of previous claims, wherein the one or more devices further includes energy generation elements and energy storage elements, the energy generation elements and the energy storage elements being included in the first layer of the stack model.

4. The method of claim 3, wherein the energy generation elements and loads being **characterized by** voltage level(s) at which they operate, power level(s) they provide or consume energy, frequency of oscillation of the energy signal and a schedule for when they will be active and predicted power level(s) for said active period and the energy storage elements being **characterized by** battery discharge limit(s) and current and desired storage level(s).

5. The method of claim 4, further comprising associating a value to energy to the energy generation elements, energy storage elements and loads, wherein said value being fixed or varying over time.

6. The method of claim 3, wherein the control plane of the first layer comprises providing an interface to the second layer for defining: whether the elements and loads are sources of energy or receptors, waveform features, nominal voltage level(s), power level(s) or range, value of the energy as function of power level or time and predicted active time and relevant features including power level, and wherein the energy plane of the first layer provides or receives the energy at appropriate times and voltage levels to or from the second layer.

7. The method of claim 2, wherein the second layer further comprises informing the first layer whether or not an energy demand requested by the first layer will be met and/or to what degree it will be met.

8. The method of claim 2, wherein the control plane of the second layer comprises providing an interface to the third layer for defining: source and/or destination information, energy quantity or rate, schedule details and voltage level(s), and wherein the energy plane of the second layer provides information about a contracted energy from the source(s) of energy at the appropriate voltage level at a specified time period and receives energy from the third layer at a desired voltage and agreed upon time.

9. The method of claim 2, wherein the third layer further includes capacity limits of links along the defined path and losses occurring on said links and at intermediate nodes.

10. The method of claim 9, wherein the control plane of the third layer comprises providing an interface to the second layer for defining costs and/or schedule impacts of distributing the energy over the network, and wherein the control plane of the third layer provides and interface to the fourth layer indicating a planned amount of energy to distribute to/from a specific node over a specified time period.

11. The method of claim 9 or 10, wherein the control plane of the fourth layer comprises providing an interface to the third layer for defining physical features including losses and/or congestion information of each link.

12. The method of previous claims, wherein said energy being electrical energy.

13. A system for decentralized energy distribution, the system comprising a plurality of connected nodes of an energy network, wherein said plurality of nodes being adapted and configured to distribute energy between them, and wherein each node comprises one or more devices including energy loads, **characterized in that** each node comprises a layered stack model through which said distribution of energy is performed, so that energy distribution interactions between the nodes occur at a same stack layer across the nodes, wherein each stack model has at least three layers, and wherein each layer comprises a control plane configured to exchange control information between layers and nodes and an energy plane configured to exchange actual energy among layers and nodes.

14. The system of claim 13, wherein each node comprises a stack model having four layers, including:
a first layer (101), located at the top of the stack model, at least including said energy loads, wherein the energy loads at least include one of lighting systems and appliances including televisions, radios and refrigerators and/or heating equipment;
a second layer (102), located under the first layer, to match sources of energy to destinations according to the cost and value two nodes have for certain amounts of energy at a particular time of day;
a third layer (103), located under the second layer, to define a path over which energy has to be distributed; and
a fourth layer (104), located at the bottom, under the third layer, to define a transmission medium through which the energy will be distributed between adjacent nodes in the energy network,

15. The system of claim 14, wherein the one or more devices further comprises energy generation elements at least including one of solar panels, wind turbines, diesel generation systems, geothermal systems or a human-powered crank generator and energy storage elements at least including one of batteries and capacitors, the energy generation elements and the energy storage elements being included in the first layer of the stack model.
